# EUROPEAN PATENT SPECIFICATION

(11) **EP 0 562 300 B1**
(45) Date of publication and mention of the grant of the patent: **06.08.1997**
(21) Application number: 93103083.7
(22) Date of filing: 26.02.1993
(51) Int. Cl.: A47B 96/18, B29C 63/04

(54) **Panel for work-tables of furniture with a watertight joint of the covering materials**
Platte für Arbeitstisch mit einer Wasserdichten Verbindung der Beschichtungsmaterialien
Panneau pour table de travail avec une jonction superméable à l'eau des matériaux de revêtement

(30) Priority: 19.03.1992 IT US920038
(43) Date of publication of application: 29.09.1993
(73) Proprietor: SPRING DUE Srl, I-33070 S. Cassiano di Brugnera (PN) (IT)
(72) Inventor: De Marchi, Lino, I-33080 Ghirano di Prata (PN) (IT)
(74) Representative: Petraz, Gilberto Luigi

(56) References cited:
- EP-A- 0 124 711
- EP-A- 0 183 914
- EP-A- 0 234 192
- DE-A- 3 810 053
- DE-U- 8 910 540
- US-A- 4 751 125

## Description

This invention concerns a panel for work-tables of furniture with a watertight joint of the covering materials, as set forth in the main claim.

To be more exact, the invention is applied to the waterproof covering materials employed for the surface finishing of panels for furniture, such as the panels used in making the work-tables of furniture and, in particular, of furniture for kitchens or work-tables for bars, butchers' benches, etc.

Such work-tables are normally covered with a sheet of plastic material so as to make their surface waterproof and to be able to use as an inner body a low cost material such as chipboard panels. The covering consists of two different materials.

The upper surface and edges are covered with a stiffer and more costly plastic material, whereas the lower surface is covered (for reasons of finish and contrast) with various materials such as plastic-coated paper or plastic material of a lower quality.

The work carried out on the work-tables entails the handling of various liquids, which can run along the covering material and can stop on the lower surface of the work-table.

The prior art document EP-A-0.183.914 provides a panel for work-tables in which the upper covering sheet is connected to a corner element only along a short segment at a curved position, thus creating an unsafe connection at which the adhesive material does not always create a continuous uniform connecting layer. Moreover, this connection is not always perfectly aligned, so that small protrusions and recesses always exist at the closure edge.

This situation has the effect that a drop of liquid is certainly conveyed and retained or caused to fall, but the residual moisture accompanying the drop always stays in the terminal zone of the upper covering in cooperation with the corner element.

This residual moisture, because also it is often accompanied by cleaning and disinfecting substances with a strong diluting power, attacks the layer of adhesive and penetrates between the upper covering layer and the corner element.

This action of penetration of the moisture is a slow action which goes on for months but then becomes noticeable inasmuch as this moisture enters the panel and becomes lodged therein without being able to evaporate and progressively increases, thus causing swelling of the zone around the connection and breaking the connection.

In fact, when the moisture has entered, it does not leave since the capillary action which conveys the moisture inwards does not provide enough aeration for evaporation but makes the panel swell and deforms the covering material.

The present invention has the purpose of achieving a watertight joint between the sheet of the laminated plastic covering the upper surface and the sheet covering the lower surface of the work-table.

This watertight joint is particularly required at the front edge with which the user cooperates, for the liquids are to be found most often in that zone.

The invention is applied to the woodworking industry and in particular to the fabrication of furniture and advantageously, but not only, of kitchen furniture.

The work-tables of furniture consist generally of normally flat inner bodies made of a low cost material, such as, for instance, chipboard panels or the like, which are covered by the hot-moulding of sheets of a laminated plastic applied respectively to the upper and lower surfaces of the substantially flat inner body.

The sheets of laminated plastic are normally two in number and possess different characteristics. The sheet of laminated plastic positioned on the upper surface is usually and advantageously folded to cover at least the front edge too of the flat inner body.

The upper sheet of laminated plastic normally extends at least to the lower edge of the work-table so as to avoid visible joints, which would be unsightly.

The line of the joint between the upper sheet of laminated plastic and the lower sheet may therefore, depending on the shape of the edge of the panel, coincide with a corner of the edge of the panel or may lie advantageously on the hidden surface, normally the lower surface, of the panel. In the first of these cases the joint between the plastic sheets is formed substantially as a butt joint, while in the second case the upper sheet of laminated plastic is butt-jointed to the lower sheet of laminated plastic at a position near the edge of the panel but on its lower surface.

The line of the joint between the upper sheet of laminated plastic and the lower sheet of laminated plastic thus lies on the lower surface of the work-table at a position substantially retracted from the edge.

In these known types of joint, where the edges of the two sheets of laminated plastic merely face each other along the line of the joint, it is not possible to ensure a watertight condition of the covering and this fact enables liquids to infiltrate into the flat inner body, thus creating serious problems in the long term.

In fact, water or another liquid penetrates into the chipboard panel through the opening which forms along the line of the joint between the two sheets of laminated plastic, thus causing deterioration of the work-table in the long term.

The present applicants have designed, tested and embodied this invention to overcome the shortcomings of the state of the art and to achieve further advantages.

This invention is set forth and characterised in the main claim, while the dependent claims describe variants of the idea of the main embodiment.

The joint according to the invention between the covering sheets of laminated plastic makes possible a simple, lasting and economical seal of the gap created along the surface of the joint between the two sheets.

A watertight condition is ensured in this way for the inside of the panel, which is covered without a continuous system, and any infiltration of a liquid and of water in particular into the panel is prevented.

In the case of kitchen, restaurant, bar, etc. furniture, the work-tables are work-tables on which are lodged the cooking plate, washing sink, etc. and on which the working equipment is supported.

According to the invention the work-table is covered with a first sheet of a finishing laminated plastic of a good quality over its visible surface and with a second sheet of a deformable plastic material of a lower quality, such as PVC film for instance, on its hidden surface.

For reasons of good appearance the surface of the joint between the two sheets is made advantageously on the hidden surface of the work-table.

A ledge of a thickness substantially equal to the thickness of the sheet of a finishing laminated plastic is provided on the surface of the panel and coincides with the surface of the joint.

This ledge can be made either by machine or during the step of applying the second sheet of plastic material of a lower quality.

On the basis of this lay-out the second sheet of plastic material is fitted by being made to adhere to the ledge and thus by itself creating a ledge which extends beyond the ledge by a desired width.

Thereafter the first sheet of laminated plastic, which is applied by hot-moulding, covers the strip by a desired width so as to cooperate with the ledge and thus ensures an engagement seal of the zone of the joint between the second sheet of plastic material and the first sheet of laminated plastic.

The attached figures, which are given as a non-restrictive example, show some preferred embodiments of the invention as follows:-
- Fig.1: shows a cross-section of a panel covered according to an embodiment of the invention;
- Fig.2: shows a cross-section of a panel covered on the basis of a further embodiment of the invention.

In the figures the reference number 10 indicates generally a panel covered according to the invention.

The panel 10 consists substantially of a substantially flat inner body 11 made of a low cost material such as, for instance, a chipboard panel, and covered with sheets 12 of a laminated plastic of which one sheet is normally applied by hot-moulding and consists of a stiff plastic material of a good quality.

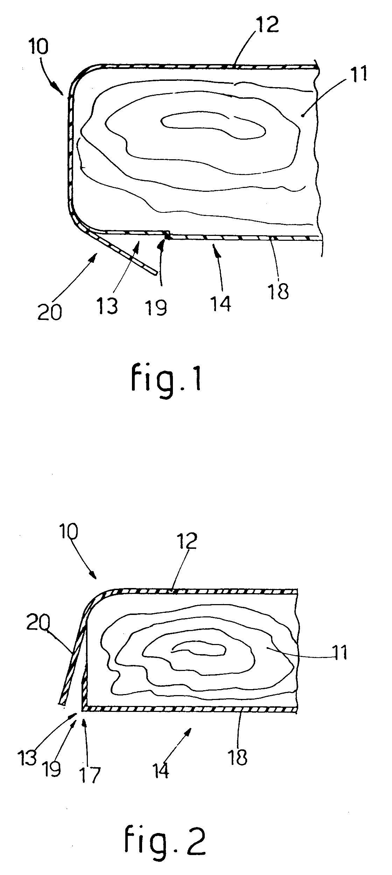

In the form of embodiment shown in Fig.1 the flat inner body 11 is covered on its upper side by a first sheet 12 of laminated plastic and on its lower side by a second sheet 18 of plastic material such as PVC film, for instance.

On the basis of this embodiment an inner ledge 19 is provided along the surface 13 of the joint on the lower surface 14 of the flat inner body 11. The height of this inner ledge 19 is substantially the same as the thickness of the first laminated plastic sheet 12 which covers the upper surface of the flat inner body 11.

The second sheet 18 of plastic material or PVC film is applied to the lower surface 14 of the inner body 11 and is made to adhere to the ledge 19 and to extend by a desired length towards the outer corner of the flat inner body 11.

The upper laminated plastic sheet 12 is then hot-moulded and caused to adhere to the outer corner of the flat inner body 11 to the extent that its terminal edge 20 cooperates with the ledge 19.

According to another form of embodiment shown in Fig.2 the surface 13 of the joint between the upper laminated plastic sheet 12 and the second sheet 18 of a plastic material, PVC film for instance, coincides with a corner 17 of the flat inner body 11. In this case the inner ledge 19 is made at the corner 17 of the panel 10.

The second sheet 18 of plastic material or PVC film is applied to the lower surface 14 of the inner body 11 so as to extend by a desired length beyond the corner 17 of the inner body 11. This second sheet 18 of plastic material extends so far as to cover at least partly the edge of the flat inner body 11 and to form a ledge 19.

Next, the first laminated plastic sheet 12 is hot-moulded onto the flat inner body 11 to the extent that it covers with its terminal edge 20 that part of the second sheet 18 of plastic material that has formed the ledge 19.

The invention enables a panel 10 to be provided in which the covering consists of sheets 12 and 18 which, even in correspondence with their surface 13 of the joint, cover the panel with a continuous application and thus prevent even the smallest infiltration of a liquid which might damage the inner body.

## Claims

1. Panel for work-tables of furniture with a watertight joint of the covering materials, the panel (10) having an upper surface and a lower surface with short intermediate sides and comprising an inner body (11) covered with plastic sheet material (12, 18), the edges of which cooperate together to create a surface (13) of the joint, the panel being characterised in that the surface (13) of the joint is defined by the superimposing, in mutual adherence, of the sheet of plastic material (12) covering the upper surface on the sheet of plastic material (12, 18) covering the lower surface.

2. Panel as in Claim 1, in which the superimposed surface is located on at least one short side of the panel, while the sheet of plastic material (12) covering the upper surface reaches the edge of the joint of the short side with the lower surface.

3. Panel as in Claim 1, in which the superimposed surface is located on the lower surface (14).

4. Panel as in Claim 1 or 3, which includes a ledge (19) located on the lower surface (14) of the panel (10) and having a thickness substantially consistent with the thickness of the covering sheet (12) of the upper surface.

## Patentansprüche

1. Platte für Möbelarbeitstische mit einer wasserdichten Verbindung der Beschichtungsmaterialien, wobei die Platte (10) eine Oberseite und eine Unterseite mit kurzen Zwischenseiten aufweist und sie über einen Innenkörper (11) verfügt, der mit Lagen (12, 18) aus Kunststoffmaterial beschichtet ist, deren Kanten so zusammenwirken, dass sie eine Verbindungsfläche (13) bilden, **dadurch gekennzeichnet,** dass die Verbindungsfläche (13) dadurch gebildet ist, dass die die Oberseite beschichtende Lage (12) aus Kunststoffmaterial auf die die Unterseite beschichtende Lage aus Kunststoffmaterial (12, 18) aufgelegt ist, wobei diese aneinander anhaften.

2. Platte nach Anspruch 1, bei der die Fläche mit der Übereinanderschichtung an mindestens einer kurzen Seite der Platte liegt, während die die Oberseite beschichtende Lage (12) aus Kunststoffmaterial die Verbindungskante zwischen der kurzen Seite und der Unterseite erreicht.

3. Platte nach Anspruch 1, bei der die Fläche mit der Übereinanderschichtung an der Unterseite (12) liegt.

4. Platte nach einem der Ansprüche 1 oder 3, mit einem Vorsprung (19), der an der Unterseite (14) der Platte (10) liegt und eine Dicke aufweist, die im wesentlichen mit der Dicke der die Oberseite beschichtenden Lage (12) übereinstimmt.

## Revendications

1. Panneau pour tables de travail de mobilier, avec une jonction étanche à l'eau des matériaux de revêtement, le panneau (10) présentant une surface supérieure et une surface inférieure avec des côtés intermédiaires courts, et comportant un corps intérieur (11) recouvert par une matière plastique (12, 18) en feuilles dont les bords coopèrent ensemble pour créer une surface (13) de la jonction, le panneau étant caractérisé en ce que la surface (13) de la jonction est définie par superposition en adhérence mutuelle de la feuille de matière plastique (12) revêtant la surface supérieure et de la feuille de matière plastique (12, 18) revêtant la surface inféreure.

2. Panneau selon la revendication 1, dans lequel la surface de superposition est située sur au moins un côté court du panneau, la feuille de matière plastique (12) recouvrant la surface supérieure atteignant le bord de la jonction entre le côté court et la surface inférieure.

3. Panneau selon la revendication 1, dans lequel la surface de superposition est située sur la surface inférieure (14).

4. Panneau selon les revendications 1 ou 3, qui comprend une moulure (19) située sur la surface inférieure (14) du panneau (10) et présentant une épaisseur qui correspond essentiellement à l'épaisseur de la feuille de revêtement (12) de la surface supérieure.
